# EUROPEAN PATENT APPLICATION

(11) **EP 1 808 220 A1**
(43) Date of publication of application: **18.07.2007**
(21) Application number: 05787916.5
(22) Date of filing: 28.09.2005
(51) Int. Cl.: B01D 67/00, B01D 71/56, B01D 61/02, B01D 69/12

(54) **PROCESS FOR PRODUCING COMPOSITE REVERSE OSMOSIS MEMBRANE**

(30) Priority: 04.10.2004 JP 2004291130; 09.08.2005 JP 2005231065
(71) Applicant: NITTO DENKO CORPORATION, Ibaraki-shi, Osaka 567-8680 (JP)
(72) Inventor: ISHIZUKA, Hirotoshi, NITTO DENKO CORPORATION, Ibaraki-shi, Osaka 5678680 (JP); TAKATA, Masakatsu, NITTO DENKO CORPORATION, Ibaraki-shi, Osaka 5678680 (JP); NAGURA, Katsumori, NITTO DENKO CORPORATION, Ibaraki-shi, Osaka 5678680 (JP); HIROSE, Masahiko, NITTO DENKO CORPORATION, Ibaraki-shi, Osaka 5678680 (JP); NISHIYAMA, Shinya, NITTO DENKO CORPORATION, Ibaraki-shi, Osaka 5678680 (JP); MATSUO, Hiroshi, NITTO DENKO CORPORATION, Ibaraki-shi, Osaka 5678680 (JP)
(74) Representative: Setna, Rohan P.
(86) International application number: PCT/JP2005/017829
(87) International publication number: WO 2006/038503

(57) **Abstract**

An object of the present invention is to provide an industrially stable process for continuously producing a composite reverse osmosis membrane. The present invention relates to a process for continuously producing a composite reverse osmosis membrane comprising a polyamide skin layer and a porous support for supporting the polyamide skin layer, the method comprising the steps of: A) applying an aqueous solution α containing a compound having two or more reactive amino groups to form a covering layer of an aqueous solution on the porous support while moving the porous support; B) pemeating the aqueous solution α in micro pores of the porous support by holding the covering layer of the aqueous solution on the porous support for 0.2 to 15 seconds; C) removing the covering layer of the aqueous solution while holding the aqueous solution α within the micro pores of the porous support; and D) after C, forming the polyamide skin layer by applying an organic solution β containing a polyfunctional acid halide onto the surface of the porous support to make the aqueous solution α contact with the organic solution β for interfacial polymerization.

## Description

### TECHNICAL FIELD

The present invention relates to a process for producing a composite reverse osmosis membrane having a polyamide skin layer formed on a surface of a porous support. Specifically the present invention relates to a process for continuously and efficiently producing a composite reverse osmosis membrane, having outstanding water permeability and salt-blocking property, used for desalination of sea water, or brine water; production of ultra pure water; concentration of valuables in drugs or food stuff industry; treatment of waste industrial waters such as dyeing wastewater, electrodeposition paint wastewater, and the like.

### BACKGROUND ART

Composite reverse osmosis membranes are widely used for production of ultra pure water, desalination of brine water or sea water, and the like. The composite reverse osmosis membranes contribute to containment of wastewater by removing and recovering pollution source or effective materials included therein from polluting substances in environmental pollution and the like, such as dyeing wastewater and electrodeposition paint wastewater. Furthermore, the reverse osmosis membranes are used for concentration or the like of active ingredients in foodstuffs usage and the like.

Reverse osmosis membranes conventionally used in industry include asymmetrical type cellulose acetate membranes (Patent Documents 1 and 2) and asymmetrical type polyamide membranes (Patent Document 3). Although these membranes had excellent performance at that time, they failed to exhibit sufficient performance to give higher amount of permeated water with lower pressure and high blocking performance. Furthermore, cellulose acetate membranes had a disadvantage of easy deterioration by organisms or hydrolysis. In order to solve these problems, there have been developed composite reverse osmosis membranes obtained by forming a thin membrane having a selective separating function substantially on a porous support as reverse osmosis membranes having a different structure from structures of asymmetric membranes. At present, membranes obtained by forming a thin membrane containing polyamide obtained by interfacial polymerization of a polyfunctional aromatic amine and a polyfunctional aromatic acid halide on a porous support are proposed (Patent Documents 4 to 6) as such composite reverse osmosis membranes. An immersion coating method may be mentioned as a general production process of this composite reverse osmosis membrane (Patent Document 4). That is, first, a continuously running porous support reinforced with a nonwoven fabric or cloth is conveyed and immersed in an aqueous solution tub containing a polyfunctional aromatic amine, making both sides of the porous support be covered with the aqueous solution. Subsequently, the excessive aqueous solution covered is removed with a rubber roll or the like. Subsequently, the porous support is conveyed and immersed into a tub of an organic solution, having no miscibility with the aqueous solution, containing a polyfunctional aromatic acid halide, forming a polyamide thin membrane by interfacial polymerization on the porous support surface. And a formed laminate is dried to remove the unreacted amine and acid by washing, and dried again, obtaining a composite reverse osmosis membrane. According to the immersion coatingmethod, composite reverse osmosis membranes having high performance can be produced by a comparatively simple equipment and operation. On the other hand, the method has following defects.

1) Control of a thickness of a covering layer of an aqueous solution, i.e., an applied thickness of the aqueous solution, is difficult. The applied thickness is dependent on an application velocity, and properties such as viscosity, density, surface tension and the like of the aqueous solution. Therefore, needs for prevention of excessive application in immersion coating method can only allow production of the composite reverse osmosis membrane usually at a comparatively low speed of approximately 3 to 6 m/minute.

2) Maintenance at a fixed value of a concentration of an acid halide in an organic solution is difficult, and therefore long-term continuous production of a composite reverse osmosis membrane is extremely difficult. That is, conveyance and immersion of a porous support covered with an amine aqueous solution into an organic solution tub make the amine aqueous solution mix in the organic solvent tub, causing deactivation of the acid halide and deterioration of effective concentration. Therefore, periodic replacement of the solution of the organic solvent tub to a fresh solution is needed, leading to discharge of a large quantity of waste solvents.

3) Since application is performed on both sides of a porous support, a polyamide thin membrane tends to be formed also on the back side. Formation of the polyamide thin membrane on the back side of the porous support leads to higher possibility of poor adhesion of the membrane leaf bonded part in case of assembling of the composite reverse osmosis membrane into a spiral type element, resulting in a risk of a large amount of faulty products.

4) Since the period of time of immersion into an amine aqueous solution tub of a porous support allows permeation of the amine aqueous solution not only in a surface layer but into the whole porous layer, excessive amine remains in the porous support after formation of a polyamide thin membrane. The remaining excessive amine needs washing with chemicals such as citric acid, sodium carbonate or sodium hypochlorite, or washing with hot water, alcoholic extraction or the like, leading to rise of production costs. Furthermore, waste fluid discharged from the washing process will increase the influence load to the environment.

Various production processes for solving the problems in the aforementioned immersion coating methods are proposed. As for application methods of amine aqueous solutions, and removing methods of excessively applied aqueous solutions, for example, disclosed are a method of removing excessive solution with a rubber roll after coating (Patent Document 7); a method of removing with a nip roller (Patent Document 8) ; and a method of drying the surface of a support with two air knives after wiping of excessive aqueous solution on the back side (Patent Document 9). However, since the methods are essentially the immersion coating method, the amine aqueous solution permeates into the whole support, failing to provide a solution for defects of the immersion coating method. An application method called a film flow method is proposed as an alternative application means of the immersion coating method. That is, this method is that after applying 100 g/m² of an amine aqueous solution only to a support surface using a flexible sheet such as a polyester film, the support is held vertical and the excessive aqueous solution is removed by gravity flow (Patent Documents 10 and 11). This method allows uniform application of the amine aqueous solution, without being dependent on a delivering speed of the support, but approximately 2 minutes of a period is needed from application to immersion in an acid chloride solution tub, which allows permeation of the amine aqueous solution into the back side from the support surface, and consequently, there is shown a tendency also for this method to give easy formation of a polyamide thin membrane on the back side of the support as in the immersion coating method. On the other hand, also in the application methods of the acid halide organic solution, effective application means as alternative methods for the immersion coating method have not been found out as in the methods for the amine aqueous solution.

Then, a production process of a composite reverse osmosis membrane that can solve problems of the immersion coating method has been proposed (Patent Document 12). The production process is called a tandem coating method, wherein applicators that allow application of several meters to 10 meters of a thin layer on a support are disposed in column (that is, in tandem), an amine solution is applied by an offset photogravure or a slot die applicator to form an amine solution thin membrane layer, and then, while the layer is held without any further treatment or while the layer is kept without drying, an acid halide organic solution thin membrane is formed on the amine solution thin membrane layer with a slot die applicator (what is called a wet-on-wet coating). Patent Document 13 describes that since the tandem coating method enables application, only onto the surface of the support, of the polyfunctional amine and the polyfunctional acid halide having an amount close to a stoichiometric amount necessary for polyamide thin membrane formation by an interfacial-polymerization reaction, the method not only can solve problems of the immersion coating method, but also can strictly control the thickness of the polyamide thin membrane, and allows efficient production of a composite reverse osmosis membrane with higher performance. However, since this method is wet-on-wet coating of a thin layer, the method needs a system having high precision, that is, a system enabling strict control of a delivering speed of a base material, a supply flow volume of a coating liquid, a tension of a base material and the like, resulting in a defect of extremely high introduction costs of production system. Furthermore, it also needs precision of the thickness of the porous support as the base material. As the porous support, usually polysulfone porous membranes, with a width of about 1 m, formed by a wet film formation method on the base fabrics such as nonwoven fabrics, cloths and the like are suitably used. Although it is dependent on precision of the thickness of the base fabric and the polysulfone layer, the precision of the thickness in the width direction is about 150 ± 5 meters. Therefore, even when the system has sufficient precision, it is extremely difficult to apply a uniform thin layer with a thickness of several meters to 10 meters, resulting in a possibility of causing application unevenness or application cut that will have a fatal influence on the performance of the reverse osmosis membrane. Therefore, adoption of the tandem coating method in production of composite reverse osmosis membranes in an industrial scale is substantially difficult.

As mentioned above, approaches which can solve the problems of the immersion coating method and enable efficient and continuous production of composite reverse osmosis membranes are not yet found out.

Patent Document 1: U.S. Pat. No. 3133132 specification
Patent Document 2: U.S. Pat. No. 3133137 specification
Patent Document 3: U.S. Pat. No. 3567632 specification
Patent Document 4: U.S. Pat. No. 4277344 specification
Patent Document 5: U.S. Pat. No. 5254261 specification
Patent Document 6: U.S. Pat. No. 3023300 specification
Patent Document 7: Patent No. 2727087 specification
Patent Document 8: Japanese Patent Application Laid-Open (JP-A) No. 08-509162 official gazette
Patent Document 9: Patent No. 2947291 specification
Patent Document 10: Patent No. 2510530 specification
Patent Document 11: JP-A No. 2002-136849 official gazette
Patent Document 12: U.S. Pat. No. 6132804 specification

### DISCLOSURE OF THE INVENTION

### Problems to be Solved by the Invention

An object of the present invention is to provide an industrially stable process for continuously producing a composite reverse osmosis membrane. The present invention will be described hereinafter in detail.

1) The present invention provides a process for producing a composite reverse osmosis membrane exhibiting high performance, the process enabling application of a necessary amount of an amine aqueous solution and an acid halide organic solution by a means for applying a fixed amount, without being dependent on a production velocity, thereby the process realizing lower costs and higher yield and moreover, being also thoughtful of health and environment.
2) The present invention provides a process for producing a composite reverse osmosis membrane attaining stable quality, the process avoiding concentration variation of an acid halide caused by contamination with an amine or deactivation often found in the immersion coating method, and avoiding formation of a thin membrane on a back side of a porous support.
3) The present invention provides a process for producing a composite reverse osmosis membrane realizing a less amount of unreacted residual amine and having high-performance.
4) The present invention provides a process for producing a composite reverse osmosis membrane that can exhibit a production velocity higher than that in the conventional immersion coating method and can give high performance.

### Means for Solving the Problems

The present invention relates to a process for continuously producing a composite reverse osmosis membrane comprising a polyamide skin layer and a porous support for supporting the polyamide skin layer, the method comprising the steps of:
A) applying an aqueous solution α containing a compound having two or more reactive amino groups to form a covering layer of an aqueous solution on the porous support while moving the porous support;
B) pemeating the aqueous solution α in micro pores of the porous support by holding the covering layer of the aqueous solution on the porous support for 0.2 to 15 seconds;
C) removing the covering layer of the aqueous solution while holding the aqueous solution α within the micro pores of the porous support; and
D) after C, forming the polyamide skin layer by applying an organic solution β containing a polyfunctional acid halide onto the surface of the porous support to make the aqueous solution α contact with the organic solution β for interfacial polymerization.

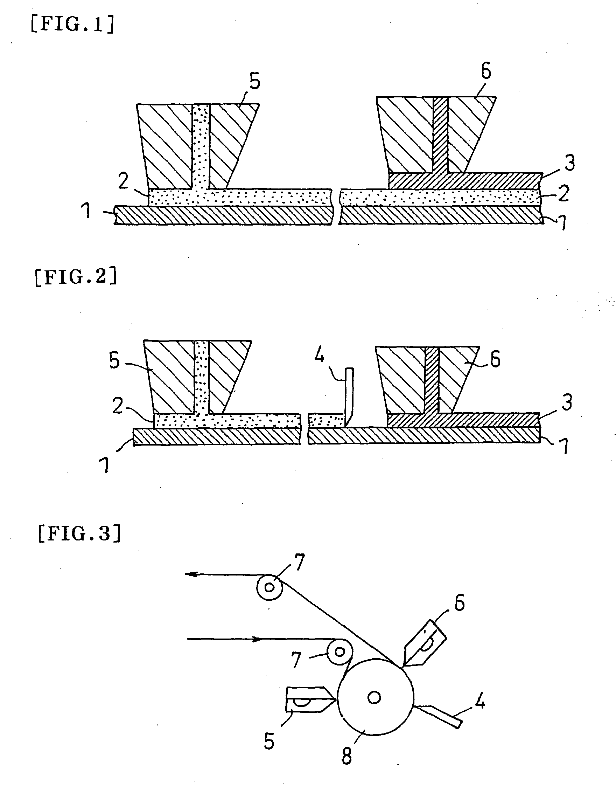

That is, the production process of the present invention evidently differs from the tandem coating method (wet-on-wet coating) disclosed in the Patent Document 12 in that the production process of the present invention includes a step of substantially completely removing the covering layer of an aqueous solution after formation of the covering layer of the aqueous solution by application of the aqueous solution α on the porous support, and before application of the organic solution β. A technical book about application technology ("COATING", processing technology study group, P. 405 (2002)) describes that a wet-on-wet coating is an application method that applies a new liquid membrane layer on a first coating liquidmembrane layer that covers the whole base material (support) without destroying the first layer. In detail, as shown in Fig. 1, in this wet-on-wet coating, a covering layer 2 of an aqueous solution is formed on a porous support 1, and an organic solution covering layer 3 is further formed on the covering layer 2 of an aqueous solution while leaving the covering layer 2 of an aqueous solution to perform interfacial polymerization.

On the other hand, as shown in Fig. 2, the production process of the present invention removes substantially completely the covering layer 2 of an aqueous solution obtained by applying the aqueous solution α on the porous support 1 with wiping or the like by a removal system 4. However, here, since the aqueous solution α is held in a state impregnated within the micro pores of the surface of the porous support 1, and therefore the covering layer 2 of an aqueous solution that covers the whole surface of the porous support 1 hardly exists, this method is not a wet-on-wet coating, but is substantially carried out only by one layer of the organic solution covering layer 3. Furthermore, since in the production process of the present invention, a uniform applied thickness of the aqueous solution α and the organic solution β can be obtained in consideration of thickness precision and surface roughness of the porous support, a composite reverse osmosis membrane having high-performance may be stably produced even with a system of general mechanical precision in contrast to a case of formation of a thin layer (several micrometers to 10 micrometers) disclosed in the Patent Document 12.

In the production process of the present invention, the surface temperature of the coated membrane of the organic solution β immediately after application is preferably 10 to 50°C.

In the step A), it is preferred to apply the aqueous solution α using a microgravure coater or a slot die coater. And it is also preferred that the slot die coater is provided with a temperature control mechanism.

In the step C), it is preferred to remove the covering layer of the aqueous solution by wiping using a rubber blade wiper or an air knife.

In the step D), it is preferred to apply the organic solution β using a slot die coater. And it is also preferred that the slot die coater is provided with a temperature control mechanism.

In the production process of the present invention, it is preferred that the thickness of the covering layer of an aqueous solution is 10 to 50 micrometers. And it is also preferred that the applied thickness (coated membrane thickness) of the organic solution β is 10 to 70 micrometers.

The present invention also relates to a composite reverse osmosis membrane obtained by the production process.

### Effect of the Invention

The process for producing a composite reverse osmosis membrane of the present invention can greatly reduce the amount of the amine aqueous solution and the polyfunctional acid chloride organic solution to be used, compared with a case by the conventional immersion coating method. Since the process can reduce unreacted materials in the composite reverse osmosis membrane, subsequent washing operation can be simplified. Since the process gives neither variation with time of the polyfunctional acid chloride concentration in the organic solution nor velocity dependency of the applied thickness which are often found in the immersion coating method, the process enables stable production of the composite reverse osmosis membrane having high-performance at a high speed. If the composite reverse osmosis membrane obtained by the production process of the present invention is incorporated into a spiral type element, an extremely high-performance spiral type element can be produced owing to high reliability in the bonded parts.

### BRIEF DESCRIPTION OF THE DRAWINGS

Fig. 1 is an outline process chart showing an example of a wet-on-wet coating method.
Fig. 2 is an outline process chart showing an example of a production process of the present invention.
Fig. 3 is an outline process chart showing another example of the production process of the present invention.
Fig. 4 is an outline process chart showing another example of the production process of the present invention.
Fig. 5 is an outline process chart showing another example of the production process of the present invention.
Fig. 6 is a outline chart of a slot die coater with a temperature control mechanism.

### DESCRIPTION OF NOTATIONS

1: Porous Support
2: Covering Layer of Aqueous Solution
3: Organic Solution Covering Layer
4: Removal System
5, 6: Coater
7: Guide Roll
8: Backing Roll
9: Slot Die Coater
10: Solution Tank
11: Gear Pump
12: Temperature Control Mechanism
13: Heat Exchange Water

### BEST MODE FOR CARRYING OUT THE INVENTION

The production process of the present invention will be described hereinafter in detail with reference to drawings. Fig. 3 is an outline process chart showing an example of the production process of the composite reverse osmosis membrane of the present invention. While a porous support travels by being supported with a backing roll 8 through a guide roll 7, an aqueous solution α is applied on the whole surface of the porous support by a coater 5 (a slot die coater or the like) to form a covering layer of an aqueous solution. And while the covering layer of an aqueous solution runs on the backing roll 8 with the porous support, the aqueous solution α permeates in micro pores in the porous support. Then, the covering layer of an aqueous solution is substantially completely removed (removal by wiping) bya removal systems 4 (an air knife, a blade wiper, or the like), and immediately after that, the organic solution β is applied onto the whole surface of the porous support by a coater 6 (a slot die coater or the like), forming an organic solution covering layer (coated membrane). And a polyamide skin layer is formed on the porous support by interfacial-polymerization or the like between a polyfunctional acid halide in the organic solution covering layer, a polyfunctional amine that exists in an impregnated state in the micro pores of the porous support, and the polyfunctional amine adsorbing on the surface of the porous support. The production process enables industrially stable and continuous production of the composite reverse osmosis membrane having high performance. In addition, a laminate consisting of the porous support and the polyamide skin layer may be conveyed and dried, if necessary, in a drying furnace to produce the composite reverse osmosis membrane. Drying by heating forms a denser skin layer, resulting in improved salt-blocking property and stable performance during preservation of the composite reverse osmosis membrane.

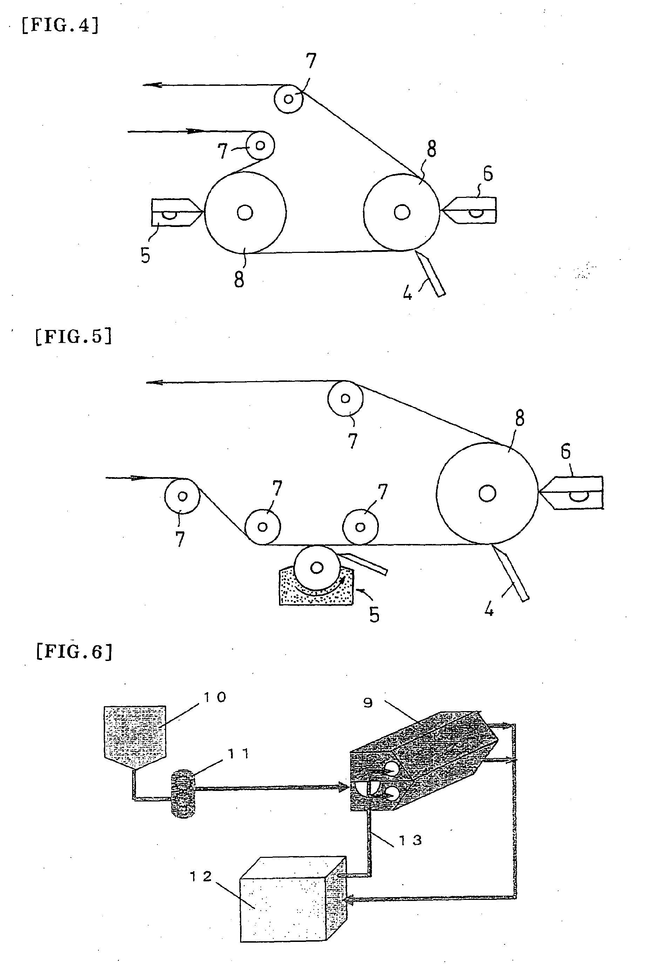

Fig. 4 shows an example wherein the backing rolls 8 are individually installed in the coaters 5 and 6, and the distance between the backing rolls 8 is made variable according to the delivering speed of the porous support in order to keep constant the period of time from application of the aqueous solution α to removal of the covering layer of an aqueous solution and application of the organic solution β.

Fig. 5 shows an example that uses a microgravure coater as the coater 5.

The porous support used for the present invention is not especially limited as long as it is of a material that can support a polyamide skin layer, and ultra filtration membranes that have asymmetric structures reinforced with nonwoven fabrics or cloths, or uniform structures, and that have a molecular weight cutoff of 20,000 to 100,000 Daltons are suitably used. Materials for formation of the porous support include, for example, polysulfone, polyether sulfone, polyphenyl sulfone, polyacrylonitrile, ethylene-vinylalcohol copolymers, cellulose acetate and the like, and polysulfone or polyether sulfone having excellent mechanical strength, chemical resistance, and heat resistance may be suitably used.

In many cases, the above-described porous supports are produced by a non-solvent phase separation method usually referred to as a wet film formation, and for example, can be industrially produced by a method disclosed in JP-A No. 2000-4238.

Compounds having two ormore reactive amino groups that are included in the aqueous solution α used in the present invention are not especially limited as long as they are of polyfunctional amines, and include aromatic, aliphatic, and alicyclic polyfunctional amines. The polyfunctional amines may be used independently or may be used in combination.

The aromatic polyfunctional amines include, for example, m-phenylenediamine, p-phenylenediamine, 1,3,5-triamino- benzene, 1,2,4-triaminobenzene, 3,5-diaminobenzoic acid, 2,4-diaminotoluene, 2,6-diaminotoluene, 2,4-diaminoanisole, amidol, xylylenediamine etc.

The aliphatic polyfunctional amines include, for example, ethylenediamine, propylenediamine, tris(2-aminoethyl)amine, etc.

The alicyclic polyfunctional amines include, for example, 1,3-diaminocyclohexane, 1,2-diaminocyclohexane, 1,4-diaminocyclohexane, piperazine, 2,5-dimethylpiperazine, 4-aminomethylpiperazine, etc.

Of the above-described polyfunctional amines, m-phenylenediamine that is an aromatic polyfunctional amine is especially suitably used.

The concentration of the polyfunctional amine in the aqueous solution α is usually approximately 0.1 to 10% by weight, preferably 0.5 to 5% by weight, and more preferably 2 to 4% by weight.

The aqueous solution α containing the polyfunctional amine may contain, for example, a small amount of polymers such as polyvinyl alcohol, polyvinyl pyrrolidone, and polyacrylic acid; polyhydric alcohols such as sorbitol and glycerin, in order to facilitate application onto the porous support and to improve the performance of the obtained composite reverse osmosis membrane.

Furthermore, salts described in JP-A No. 02-187135 obtained from tetra alkylammonium halide or trialkylammonium and an organic acid are also suitably used in order to facilitate film formation, improve absorptivity of the aqueous solution α to the porous support, promote condensation reaction, and the like.

In addition, the aqueous solution α may also include surfactants such as sodium dodecyl benzene sulfonate and sodium dodecyl sulfate (sodium lauryl sulfate). These surfactants have an effect of improving the wettability of the aqueous solution α to the porous support. Proper concentration may be more than a critical micelle concentration, and it is usually approximately 0.1 to 0.3% by weight, and preferably 0.15 to 0.2% by weight.

Furthermore, in order to promote the polycondensation reaction at the interface, use of sodium hydroxide or trisodium phosphate that can remove hydrogen halide formed in the interface reaction, or inclusion of acylation catalysts or the like in the aqueous solution α is useful.

In order to increase permeation flux, compounds having a solubility parameter of 8 to 14 (cal/cm³)^{1/2} described in JP-A No.08-224452 may also be added in the aqueous solution α and especially, ethanol, propanol, isopropyl alcohol, and the like are suitably used.

The viscosity of the aqueous solution α may be adjusted so as to facilitate application, as mentioned above, and it is preferably 1 to 20 mPa.S, and more preferably 1 to 5 mPa·S.

The applicationmeans of the aqueous solution α is not particularly limited as long as it is a method to allow fixed amount of application only to a front face side of the porous support, and the method include, for example, coaters such as reverse roll coater, reverse offset photogravure coater, microgravure coater, kiss coater, rod coater, curtain spray coater, fountain die coater, slot die coater; coating methods by flexible absorbent sheets disclosed in Japanese Examined Patent Publication Nos. 61-48995 and 61-48996 official gazettes, and the like. From the point of view of fixed-amount application and operability, the slot die coater and the microgravure coater are suitably used. These coaters preferably have a temperature control mechanism.

It goes without saying that a die coater in general has high fixed-amount application capability and allows easy adjustment of applied thickness, since the slot die coater is a pre-metering type die coater, it has an advantage that even the clearance between the support surface and the die lip that has been set wider, which is referred to as a gap height, can easily give neither application unevenness nor solution cut. Usually, the gap height may be extended to 3 to 5 times of the applied thickness. On the other hand, in order to realize uniform application, the die coaters of post metering type like the fountain die coater need a gap height in a range of 1 to 2 times of the applied thickness. Therefore, the slot die coater is especially suitably used because of few troubles such as entrapment of foreign matters or the support.

The microgravure coater is a kind of a reverse kiss coater, and it has a photogravure roll with a diameter of 20 to 50 mm assembled therein. Since the microgravure coater has a smaller diameter of a roll compared to conventional photogravure rolls, it can reduce a composition variation of the solution by evaporation of the coating liquid and allows easy roll replacement operation, and is suitably used.

Although the applied thickness of the aqueous solution α is not particularly limited since the covering layer of an aqueous solution formed by kept standing in a predetermined time after application is to be substantially completely removed, in order to realize uniform and stable application without causing unevenness on the porous support surface, it is preferably 10 to 50 micrometers, and more preferably 20 to 40 micrometers. As previously described, there is a possibility that the applied thickness less than 10 micrometers may disadvantageously cause application nonuniformity and solution cut due to precision defect of thickness and surface unevenness of the porous support. Furthermore, even when uniform application is realized, a covering layer of an aqueous solution having a thickness less than 10 micrometers may disadvantageously cause "repellent phenomenon" in a short period of time after application due to permeation nonuniformity of the liquid membrane or unevenness on the surface of the porous support. On the other hand, although dependent also on the concentration of the polyfunctional amine, the application thickness more than 50 micrometers provides extremely excessive amount of the amine with respect to the amount of the amine necessary for formation of the polyamide skin layer, leading to a large amount of disadvantageous waste fluid in the subsequent removal step.

In the production process of the present invention, after formation of the covering layer of an aqueous solution by application of the aqueous solution α on the porous support surface, the aqueous solution α is forced to permeate and diffuse on the porous support surface to be adsorbed by keeping the covering layer of the aqueous solution for a predetermined period of time. Subsequently, an excessive amount of the covering layer of the aqueous solution is removed, and here a period of time after application of the aqueous solution α until removal of the covering layer of the aqueous solution, that is a retention period of the covering layer of the aqueous solution, may only be an extremely short period of 0.2 to 15 seconds. Although dependent also on the composition and the viscosity of the aqueous solution α and the pore size of the surface layer of the porous support, the period is preferably 0.2 to 5 seconds, and more preferably 0.2 to 3 seconds. The retention time for less than 0.2 seconds may not allow uniform permeation and diffusion of the aqueous solution α into micro pores on the surface of the porous support, which is disadvantageous. On the other hand, the retention time exceeding 15 seconds may disadvantageously allow permeation and diffusion of the aqueous solution α into the porous support and allow a large amount of the unreacted amine to remain.

In the conventional immersion coating method, the contact period of time between a support and an amine aqueous solution for 10 seconds to several minutes has been usually needed, and moreover, in order to forma polyamide thin membrane by an interfacial-polymerization reaction, a covering layer of an aqueous solution for covering the whole surface of the porous support has been usually needed. According to the production process of the present invention, even in the case where the covering layer of an aqueous solution is substantially completely removed, contact in an extremely short period of time can provide a composite reverse osmosis membrane with high-performance. The reason is probably that a capillary phenomenon forces the aqueous solution α to permeate instantaneously into micro pores existing on the surface of the porous support, and simultaneously the polyfunctional amine is adsorbed on the surface of the porous support. Furthermore, the reason for formation of the polyamide skin layer even substantially without existence of the covering layer of an aqueous solution on the surface of the porous support is probably that the polyfunctional amine in the aqueous solution α that exists in an impregnated state on the surface of the porous support reacts with the polyfunctional acid halide in the organic solution β via the micro pores. Furthermore, as Patent No. 2727087 specification and JP-A No. 07-313852 official gazette disclose, the polyfunctional amine adsorbed on the surface of the porous support also participates in the reaction.

In the production process of the present invention, after contact of the porous support and the covering layer of an aqueous solution for 0.2 to 15 seconds, the covering layer of an aqueous solution is removed, and in this case the removal step is preferred to be performed immediately before application of the organic solution β as far as possible.

Means for removing the covering layer of an aqueous solution are not particularly limited as long as they are means to allow substantially perfect removal of the covering layer of an aqueous solution from the porous support. And the means include, for example, rubber blade wipers, air knives, adsorption sponge rolls, plastic plate wipers such as a product made from polyethylene, polyester or the like, vacuum liquid-absorbing rolls, and squeegees such as a product made of urethane rubber or the like. It is especially preferred to use rubber blade wipers or air knives.

As materials of rubber blade wipers, for example, nitrile rubber, butyl rubber, fluoro rubber, silicone rubber, urethane rubber, and the like may be mentioned, and nitrile rubber or fluoro rubber are suitably used in respect of abrasion resistance and chemical resistance.

In use of the air knife, it is necessary to approach the air knife the area where the porous support is supported with a roll, and to make air be blown at a velocity of 30 to 150 m/second in order to substantially completely remove the covering layer of an aqueous solution from the surface of the porous support. The distance between the air knife and the surface of the porous support is preferably 1 to 5 mm, and more preferably 1 to 2 mm. Inert gases like nitrogen gas may be blown instead of air.

In the present invention, "substantially perfect removal of the covering layer of an aqueous solution" represents a state wherein contact with a finger to the surface of the porous support from which the covering layer of an aqueous solution has been removed gives moisture feel, and represents that the covering layer of an aqueous solution is removed until a state in which paper having absorbency like a tissue paper does not get wet even when the surface of the porous support is lightly wiped with such paper having absorbency.

Immediately after the above-described removal step of C), the organic solution β containing a polyfunctional acid halide is applied on the surface of the porous support. And thereby, the polyamide skin layer is formed by interfacial polymerization by contact between the organic solution β, the aqueous solutions α that exists in an impregnated condition within the micro pores of the surface of the porous support, and the aqueous solutions α adsorbed on the surface of the porous support.

Polyfunctional acid halides included in the organic solution β used for the present invention are not particularly limited, and include aromatic, aliphatic, and alicyclic polyfunctional acid halides. The polyfunctional acid halides may be used independently or may also be used in combination.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

Of the above described halides, trimesic acid trichloride is suitably used.

The content of the polyfunctional acid halide in the organic solution β is not especially limited, and it is preferably 0.01 to 5%, by weight, and more preferably 0.05 to 0.5% by weight.

In order to promote the polycondensation reaction in the interface, it is useful to use sodium hydroxide or trisodium phosphate that can remove hydrogen halides formed by the interface reaction, and it is also useful that the organic solution β includes an acylation catalyst or the like as a catalyst.

As organic solvents of the organic solution β, hydrocarbon solvents immiscible with water, such as hexane and heptane, are preferred. However, the organic solvent does not necessarily need to be of single component, and since commercial mixed organic solvents such as an isoparaffin IP solvent (made by Idemitsu Kosan Co., Ltd.) may be obtained at lower price, these solvents are also preferable.

Application means of the organic solution β are not especially limited, and a slot die coater is the most preferable application means. This is because that since the interfacial-polymerization reaction starts at the moment of application of the organic solution β even slight disorder of the liquid membrane induces defects of the polyamide skin layer, needed are application means that do not give shearing force to the liquid membrane as much as possible.

Since it is necessary to set a gap height at a position in the vicinity of the applied thickness as described above, die coaters of post metering type like a fountain die coater are not preferred. Slide coaters, curtain coaters, and the like may be mentioned as application means that do not likely give shearing force, but since the viscosity of the organic solution β is usually extremely low as approximately 0.7 to 2 mPa·S, these means may cause cut in coated membranes and cannot be used. A curtain spray coater may be mentioned as another application means, but the coater cannot be used for organic solvents due to possible problems in safety.

The applied thickness (applied membrane thickness) of the organic solution β is dependent on the concentration of the polyfunctional acid halides, properties such as viscosity and surface tension of the organic solution β, and the delivering speed of the porous support, and it is preferably 10 to 70 micrometers, and more preferably 30 to 50 micrometers. As described above, The applied thickness less than 10 micrometers has a possibility of application unevenness and a cut in coated membrane resulting from surface roughness and thickness accuracy of the porous support. On the other hand, the applied thickness more than 70 micrometers has a possibility of causing solution dripping.

The temperature of the above described aqueous solution α and of the organic solution β especially the temperature immediately after application of the organic solution β affects the reaction velocity of interfacial polymerization and the shape and the cross-linking density of the polyamide skin layer to be formed, and therefore, it is an important controlling factor in production of the composite reverse osmosis membrane having stable performance. Since especially the production process of the present invention performs interfacial polymerization with only a fixed amount of application needed for formation of the skin layer, the process tends to be influenced by the temperature of the aqueous solution α and the organic solution β as compared with the conventional immersion coating method. The solution temperature of the above described aqueous solution α and the organic solution β at the time of application needs to be suitably adjusted based on the temperature of the porous support and the room temperature, and it is preferably 10 to 50°C, and more preferably 20 to 50°C.

In the present invention, the surface temperature of the coated membrane immediately after application of the organic solution β on the porous support varies with kinds and compositions of raw materials used for the aqueous solution α and the organic solution β and it is preferably 10 to 50°C, more preferably 20 to 45°C, and especially preferably 20 to 40°C.

Methods for applying the aqueous solution α and the organic solution β while maintaining within the above-described temperature range include a method of supplying to coaters after precontrol of temperature with a supply tank with a jacket, a method of arrangement of a heat exchanger in the course of the charging line and the lie, and therefore, use of a slot die coater with a temperature control mechanism is especially preferred. The material of the die is usually metals such as stainless steel. Since this material has excellent thermal conduction and large heat capacity, it allows heat exchange in a comparatively shorter period of time, and enables temperature control with excellent precision. Furthermore, when heating, heating immediately before application can suppress deactivation of the polyfunctional acid halide within a minimum range.

For example, a slot die coater having channels over and under the die for heat exchange solvents such as water, as shown in Fig. 6, may be suitably used as such a slot die coater with a temperature control mechanism.

The delivering speed of the porous support depends on coating methods, coating conditions, and the property of the solution, and therefore it cannot be strictly determined, but the delivering speed of the porous support is preferably 10 to 50 m /minute, and more preferably 10 to 30 m/minute. Delivering speeds less than 10 m/minute have a possibility of solution dripping, in the case of application of the organic solution β with a slot die coater. On the other hand, delivering speeds exceeding 50 m/minute may probably cause application defect with accompanied with air bubbles.

Comparatively easy prediction of stable application velocities in application of the organic solution β by a slot die coater may be given using the simulation of meniscus shape of the die point by commercial fluid analysis software (for example, FLOW-3D manufactured by Flow Science Inc., U.S.A) and analysis formulas disclosed in a technical book of application technology (Franz Durst and Hans-Gunter Wagner, Slot Coating 11a, Liquid Film Coating, P.401-426 (1997)).

As described above, the organic solution β is applied on the porous support using a slot die coater, and a polyamide skin layer is formed by interfacial polymerization with contact between the organic solution β the aqueous solution α that exists in an impregnated state within micro pores of the surface of the porous support and the aqueous solution α adsorbed on the surface of the porous support. Then, the porous support having the polyamide skin layer is conveyed, if necessary, into a drying furnace, and the support is dried to obtain a composite reverse osmosis membrane having a still more delicate polyamide skin layer. The drying temperature is usually 20 to 150°C and is preferably 70 to 130°C. And the drying period is usually 20 seconds to 120 seconds, and preferably 30 seconds to 60 seconds. Furthermore, as occasion demands, washing off of the unreacted polyfunctional amine or the acid, and re-drying may be carried out.

The thickness of the formed polyamide skin layer is usually approximately 0.05 to 2 micrometers, and it is preferably 0.1 to 1 micrometers, from a viewpoint of durability, high water permeability, and outstanding salt-blocking property.

### EXAMPLES

The present invention will be described hereinafter with reference to Examples, but the present invention is not limited at all by these Examples.

### (Production of porous support)

17.5 parts by weight of polysulfone (manufacturedby Solvay, P3500) was added into 82.5 parts by weight of dimethylformamide, and heated and dissolved at 80°C, and then the obtained solution was filtrated and degassed to obtain a solution for membrane formation. As a porous base material, a nonwoven fabric made of polyester with a basis weight of 74 g/m² and a thickness of 90 micrometers was used. Using the method described in JP-A No. 2000-42384 official gazette, the above-described solution for membrane formation was applied on the nonwoven fabric made of polyester and was subjected to wet membrane formation to obtain a polysulfone porous support having a thickness of 135 micrometers. Measurement of a pure water permeation flow velocity of this porous support under a condition of the pressure of 2 kgf/cm² gave 15 m³/m²·day. The molecular weight cutoff of this porous support on the basis of polyethylene glycol gave 50000 Daltons. This porous support was used as the porous support of Examples and Comparative Examples.

### Example 1

An aqueous solution α-1 containing 3% by weight of m-phenylenediamine, 0.15% by weight of sodium lauryl sulfate, 3% by weight of triethylamine, 6% by weight of camphorsulfonic acid, and 6% by weight of isopropyl alcohol, and an organic solution β-1 containing 0.25% by weight of trimesic acid trichloride (organic solvent: IP solvent) were prepared. Using an apparatus shown in Fig. 4, the porous support was conveyed at a speed of 20 m/minute, and the aqueous solution α-1 was applied on the porous support so that 30 micrometers of thickness might be given by a slot die coater to form a covering layer of the aqueous solution. Subsequently, at a point of time of 0.9 m conveyance, that is, 2.7 seconds after application of the aqueous solution α-1, the covering layer of the aqueous solution was substantially completely removed by a rubber blade wiper. Then, the porous support was conveyed to a slot die coater installed immediately after the wiper, the organic solution β-1 was applied so as to give a thickness of 50 micrometers, and was conveyed approximately 2 m under a room temperature atmosphere, with concurrent interfacial-polymerization reaction. Subsequently, the porous support was conveyed into a drying furnace at 120°C, and was dried for about 30 secondsto give a polyamide skin layer on the porous support. Thus, a composite reverse osmosis membrane was produced.

Using a 500 ppm sodium chloride solution with a pH of 6.5, a performance test of the obtained composite reverse osmosis membrane was performed under conditions of an operation pressure of 1.5 Mpa, and the salt-blocking rate by a permeated liquid electric conductivity gave 99.82%, and a permeation flux gave 1.76 m³/m².day.

### Comparative Example 1 (Immersion coating method)

The same aqueous solution α-1 and the organic solution β-1 as used in Example 1 were used.

After immersion of the porous support for 2 minutes in a tub of the aqueous solution α-1, the aqueous solution α-1 attached on the surface of the porous support was removed by a rubber blade wiper. Subsequently, the porous support was immersed in a tub of the organic solution β-1 for 20 seconds. Then, the porous support was removed out under a room temperature, and was kept standing for 1 minute, thus forming a polyamide skin layer by interfacial-polymerization reaction. Furthermore, the porous support was dried for 3 minutes in a dryer at 120°C to obtain a composite reverse osmosis membrane.

A performance test by the same method as in Example 1 of the obtained composite reverse osmosis membrane gave a salt-blocking rate of 99.14% by the permeated liquid electric conductivity and a permeation flux of 1.46 m³/m²·day.

### (Evaluation)

In Comparative Example 1, the applied thickness of each solution was determined from the weight and the solution density of the porous support before and after immersion in the aqueous solution α-1 and the organic solution β-1 for comparison with the applied thickness of each solution in Example 1.

In addition, using 50 vol% of ethanol aqueous solution, the unreactedm-phenylenediamine remaining in the composite reverse osmosis membranes in Example 1 and Comparative Example 1 was extracted respectively, and the amount of m-phenylenediamine remaining was determined with absorbance of the extract at a measured wavelength of 210 nm.

Furthermore, the planes of the nonwoven fabrics of the composite reverse osmosis membranes in Example 1 or Comparative Example 1 were adhered together with an adhesive that are used in a production process of spiral type elements, and a sample having a jointing with a width of 10 mm x a length of 20 mm was produced. The sample was measured for a peeling adhesive strength with a tensile testing machine.

**[Table 1]**

| | Applied thickness of aqueous solution α (micrometer) | Applied thickness of organic solution β (micrometer) | Remaining amount of MPD (mg/m²) | Adhesive strength (kgf/10 mm width) |
|---|---|---|---|---|
| Example 1 | 30 | 50 | 186 | 1.2 |
| Comparative Example 1 | 114 | 137 | 354 | 0.2 |

As is clear from Table 1, the production process of the present invention could greatly reduce the applied thickness of the amine solution and the organic solution as compared with a case by the conventional immersion coating method, and could greatly reduce the amount of unreacted m-phenylenediamine (MPD) remaining in the obtained composite reverse osmosis membrane. Furthermore, the composite reverse osmosis membrane obtained by the production process of the present invention exhibited a sufficient adhesive strength. On the contrary, the adhesive strength of the composite reverse osmosis membrane by the immersion coating method (Comparative Example 1) gave a remarkably lower value, due to contamination with amine in the membrane back side and an adverse influence at the time of polyamide skin layer formation.

### Example 2

Using the apparatus shown in Fig. 5, a composite reverse osmosis membrane was produced by the same method as in Example 1 except for having used a microgravure coater as an application means of the aqueous solution α-1.

The performance test by the same method as in Example 1 of the obtained composite reverse osmosis membrane gave a salt-blocking rate of 99.84%by permeated liquid electric conductivity and a permeation flux of 1.64m³/m²·day.

### Example 3

Prepared were an aqueous solution α-2 containing 3% by weight of m-phenylenediamine, 0.15% by weight of sodium lauryl sulfate, 3% by weight of triethylamine, 6% by weight of camphorsulfonic acid, and 12% by weight of isopropyl alcohol, and an organic solution β-1 (organic solvent: IP solvent) containing 0.25% by weight of trimesic acid trichloride. Using an apparatus shown in Fig. 3, the porous support was conveyed at a speed of 20 m/minute, and the aqueous solution α-2 was applied on the porous support so that 40 micrometers of thickness might be given by a slot die coater to form a covering layer of the aqueous solution. Subsequently, at a point of time of 0.2 m conveyance, that is, 0.6 seconds after application of the aqueous solution α-2, the covering layer of the aqueous solution was substantially completely removed by an air knife (speed: 100 m/minute). Measured results of the weight of the support before application of the aqueous solution α-2 and the weight of the support after removal of the covering layer of the aqueous solution by an air knife gave 153.9 g/m² and 154.8 g/m² as a weight per unit area, confirming substantially perfect removal of the covering layer of the aqueous solution. Subsequently, the porous support was conveyed to a slot die coater installed immediately after the air knife, the organic solution β-1 was applied so as to give a thickness of 50 micrometers, and was conveyed approximately 2 m under a room temperature atmosphere, with concurrent interfacial-polymerization reaction. Then, the porous support was conveyed into a drying furnace at 120°C, and was dried for about 30 seconds to give a polyamide skin layer on the porous support. Thus, a composite reverse osmosis membrane was produced.

The performance test by the same method as in Example 1 of the obtained composite reverse osmosis membrane gave a salt-blocking rate of 99.77% by permeated liquid electric conductivity and a permeation flux of 1.72m³/m²·day.

Examples 4 to 7 and Comparative Examples 2 and 3
Composite reverse osmosis membranes were produced by the same method as in Example 1, except for having set the applied thickness of the aqueous solution α-1 as 40 micrometers and having varied the retention times of the covering layer of the aqueous solution by varying the delivering velocities of the support or the distances from the application of the aqueous solution α-1 to the wiping in Example 1. However, in Comparative Example 2, the covering layer of the aqueous solution was removed with an air knife instead of a rubber blade wiper.

**[Table 2]**

| | Velocity of membrane formation (m/minute) | Distance (m) from application of aqueous solution α to removal of covering layer of aqueous solution | Retention time of covering layer of aqueous solution (second) | Salt-blocking rate (%) | Permeation flux (m³/m²·day) |
|---|---|---|---|---|---|
| Example 4 | 10 | 2.3 | 13.8 | 99.57 | 1.99 |
| Example 5 | 10 | 0.9 | 5.4 | 99.54 | 2.06 |
| Example 6 | 20 | 0.9 | 2.7 | 99.39 | 2.39 |
| Example 7 | 30 | 0.9 | 1.9 | 99.3 | 2.59 |
| Comparative Example 2 | 5 | 2.3 | 27.6 | 95.8 | 0.86 |
| Comparative Example 3 | 60 | 0.1 | 0.1 | 99.1 | 0.45 |

As is clear from Table 2, either excessively shorter or excessively longer contact period of the covering layer of the aqueous solution could not provide a composite reverse osmosis membrane with high-performance. Excessively shorter contact period gives insufficient amount of impregnation of the amine to the porous support, induces insufficient growth of pleats-shaped polyamide skin layer, leading to possible deterioration of water permeability. Alternatively, excessively longer contact period induces shortage of the amount of the amine subjected to interfacial-polymerization reaction with the acid chloride based on permeation and diffusion of the amine aqueous solution, and causes insufficient growth of the polyamide skin layer, leading to possible deterioration of salt-blocking property and water permeability.

### Reference Example 1

Except for having set the applied thickness of the aqueous solution α-1 as 5 micrometers in Example 1, a composite reverse osmosis membrane was produced by the same method as in Example 1. However, observed was a repellent phenomenon probably based on unevenness of permeation and of wetting of the coated membrane, at a point of time of approximately 0.4 m of traveling after application of the aqueous solution α-1.

The performance test by the same method as in Example 1 of the obtained composite reverse osmosis membrane gave a salt-blocking rate of 67.3% by permeated liquid electric conductivity and a permeation flux of 3.67 m³/m²·day.

### Reference Example 2

Except for having applied the organic solution β-2 (organic solvent: IP solvent) containing 1% by weight of trimesic acid trichloride with 5 micrometers of the applied thickness in Example 1, a composite reverse osmosis membrane was produced by the same method as in Example 1. However, a cut of the coated membrane of the organic solution β-2 caused by unevenness of thickness and projections and depressions of the surface of the support was observed, and thus uniform application of the organic solution β-2 could not be attained.

The performance test by the same method as in Example 1 of the obtained composite reverse osmosis membrane gave a salt-blocking rate of 8.1% by permeated liquid electric conductivity and a permeation flux of 16.6 m³/m²·day.

### Examples 8 to 10

Except for having applied the aqueous solution α-1 and the organic solution β-1 while controlling the temperature respectively, using a slot die coater with a temperature control mechanism shown in Fig. 6, composite reverse osmosis membranes were produced by the same method as in Example 1. In addition, the applied membrane thickness of the aqueous solution α-1 was set as 40 micrometers, and the applied membrane thickness of the organic solution β-1 was set as 50 micrometers. The solution temperature of the slot point at the time of discharge from each slot die coater was measured for with a non-contact IR surface thermometer as a solution temperature of each solution at the time of application. The surface temperature of the applied membrane immediately after application of the organic solution β-1 (0.5 seconds after application) was measured with a non-contact IR surface thermometer. Heat exchange water at the same temperature was passed through both the slot die coater for the aqueous solution and for the organic solution.

### Examples 11 and 12 and Comparative Example 4

An aqueous solution α-3 containing 3% by weight of m-phenylenediamine, 0.15% by weight of sodium lauryl sulfate, 3% by weight of triethylamine, and 6% by weight of camphorsulfonic acid was prepared. Except for having used the aqueous solution α-3 instead of the aqueous solution α-1, and having changed the temperature of the aqueous solution and the organic solution to 34°C, 45°C, and 60°C, composite reverse osmosis membranes were produced by the same method as in Example 8.

The performance test of the composite reverse osmosis membranes obtained by Examples 8 to 12 and Comparative Example 4 was performed. Table 3 shows test results.

**[Table 3]**

| | Aqueous solution | Temperature of aqueous solution (°C) | Temperature of organic solution (°C) | Applied membrane temperature of organic solution (°C) | Salt-blocking rate (%) | Permeation flux (m³/m² ·day) |
|---|---|---|---|---|---|---|
| Example 8 | α-1 | 20 | 20 | 20.5 | 99.8 | 1.2 |
| Example 9 | α-1 | 30 | 30 | 29.5 | 99.4 | 1.5 |
| Example 10 | α-1 | 34 | 34 | 33 | 99.2 | 1.4 |
| Example 11 | α-3 | 34 | 34 | 33 | 99.8 | 1.1 |
| Example 12 | α-3 | 45 | 45 | 42 | 99.4 | 1.3 |
| Comparative Example 4 | α-3 | 60 | 60 | 55 | 12.8 | 2.6 |

Table 3 clearly shows the difference in temperature of the aqueous solution or the organic solution to be applied greatly varies performance of the obtained composite reverse osmosis membranes. Especially, the temperature on the surface of the applied membrane immediately after the application of the organic solution has a significant relationship with performance of the composite reverse osmosis membrane.

## Claims

1. A process for continuously producing a composite reverse osmosis membrane comprising a polyamide skin layer and a porous support for supporting the polyamide skin layer, the method comprising the steps of:
A) applying an aqueous solution α containing a compound having two or more reactive amino groups to form a covering layer of an aqueous solution on the porous support while moving the porous support;
B) permeating the aqueous solution α in micro pores of the porous support by holding the covering layer of the aqueous solution on the porous support for 0.2 to 15 seconds;
C) removing the covering layer of the aqueous solution while holding the aqueous solution α within the micro pores of the porous support; and
D) after C), forming the polyamide skin layer by applying an organic solution β containing a polyfunctional acid halide onto the surface of the porous support to make the aqueous solution α contact with the organic solution β for interfacial polymerization.

2. The process for producing a composite reverse osmosis membrane according to Claim 1, wherein the surface temperature of the coated membrane of the organic solution β immediately after application is 10 to 50°C.

3. The process for producing a composite reverse osmosis membrane according to Claim 1, wherein the aqueous solution α is applied using a microgravure coater or a slot die coater in A).

4. The process for producing a composite reverse osmosis membrane according to Claim 1, wherein the covering layer of the aqueous solution is removed using a rubber blade wiper or an air knife in C).

5. The process for producing a composite reverse osmosis membrane according to Claim 1, wherein the organic solution β is applied using a slot die coater in D).

6. The process for producing a composite reverse osmosis membrane according to anyone of Claims 3 to 5, wherein the slot die coater comprises a temperature control mechanism.

7. The process for producing a composite reverse osmosis membrane according to Claim 1, wherein the thickness of the covering layer of the aqueous solution is 10 to 50 micrometers.

8. The process for producing a composite reverse osmosis membrane according to Claim 1, wherein the application thickness of the organic solution β is 10 to 70 micrometers.

9. A composite reverse osmosis membrane obtained by a process according to Claim 1.
